# EUROPÄISCHE PATENTSCHRIFT

(11) **EP 3 265 501 B1**
(45) Veröffentlichungstag und Bekanntmachung des Hinweises auf die Patenterteilung: **16.08.2023**
(21) Anmeldenummer: 16706628.1
(22) Anmeldetag: 26.02.2016
(51) Int. Cl.: C08G 63/183, C09J 167/02

(54) **KLEBSTOFFE MIT GERINGEN VOC UND FOGGING-WERTEN**
ADHESIVES WITH LOW VOC AND FOGGING VALUES
COLLES PAUVRES EN VOC ET AYANT DES VALEURS D'EMBUAGE RÉDUITES

(30) Priorität: 02.03.2015 EP 15157142
(43) Veröffentlichungstag der Anmeldung: 10.01.2018
(73) Patentinhaber: Evonik Operations GmbH, 45128 Essen (DE)
(72) Erfinder: CRON, Christina, 42555 Velbert (DE); BRENNER, Gabriele, 48249 Dülmen (DE); SCHLEIMER, Bernhard, 45770 Marl (DE)
(74) Vertreter: Evonik Patent Association
(86) Internationale Anmeldenummer: PCT/EP2016/054089
(87) Internationale Veröffentlichungsnummer: WO 2016/139144

(56) Entgegenhaltungen:
- EP-A2- 0 248 658
- EP-A2- 0 354 527
- WO-A2-2009/010324
- US-A- 4 094 721
- US-A- 4 299 934
- US-A- 4 363 853

## Beschreibung

Die Erfindung betrifft Klebstoffe auf der Basis von Polyesterpolyolen, die geringe VOC- und Fogging-Werte besitzen.

Schmelzklebstoffe stellen eine wichtige Klebstoffklasse für viele Anwendungen dar, beispielsweise im Automobilbereich, im Verpackungsbereich, der Möbelfertigung oder der Textilverklebung. Sie sind bei Raumtemperatur fest und werden durch Erwärmen aufgeschmolzen und bei erhöhter Temperatur in Substanz auf das Substrat aufgebracht. Beim Abkühlen verfestigen sie sich wieder und sorgen so bereits nach kurzer Zeit für eine feste Klebbindung.

Eine Untergruppe der Schmelzklebstoffe sind reaktive Schmelzklebstoffe, die nach dem Auftragen zusätzlich vernetzen und dadurch irreversibel zum Duroplasten aushärten. Im Vergleich zu den nicht vernetzenden, rein physikalisch aushärtenden thermoplastischen Schmelzklebstoffen führt die zusätzliche chemische Aushärtung zu einer höheren Stabilität der Klebverbindung. Reaktive Schmelzklebstoffe sind besonders geeignet für Verklebungen im Automobil- und Transportbereich, Verpackungsbereich, in der Bauindustrie, Textilindustrie und in der holzverarbeitenden Industrie.

Ein bevorzugtes Beispiel für reaktive Schmelzklebstoffe sind einkomponentige feuchtigkeitshärtende Schmelzklebstoffe. Hierbei handelt es sich in der Regel um isocyanatfunktionalisierte Polymere, die durch Umsetzung von Polyolen bzw. Polyolmischungen mit einem Überschuss an Polyisocyanaten zugänglich sind.

Bei den Polyolen kann sich um jedes beliebige Hydroxygruppen tragende Polymer handeln. Hierzu zählen beispielsweise Polycarbonatdiole, Hydroxylgruppen terminierte Polybutadiene, Polyether oder Polyhydroxyacrylate bzw. Polyhydroxymethacrylate. Besonders bevorzugt sind Polyesterpolyole. Diese lassen sich beispielsweise über die ring-öffnende Polymerisation von Lactonen und bevorzugt über die lösungsmittelfreie Schmelzekondensation von Polyolen mit Polycarbonsäuren oder deren Derivaten herstellen. Bevorzugt sind lineare bifunktionelle Polyesterpolyole aus Diolen und Dicarbonsäuren, Diestern und/oder Dianhydriden. Reaktive Schmelzklebstoffe auf der Basis von Polyesterpolyolen zeigen eine gute Haftung auf einer Vielzahl von Substraten, da die Estergruppen über Wasserstoffbrückenbindungen an die Substratoberfläche binden können. Zudem lassen sich über die Art und das Verhältnis der Comonomere die Polymereigenschaften und somit auch die Klebstoffeigenschaften über einen breiten Bereich einstellen.

US 4,363,853 A beschreibt die Herstellung und Verwendung von Polyestern aus 40-80 mol% Terephthalsäure in der Säurekomponente und C2-C10-Alkylenglykolen als Schmelzkleber.

US 4,094,721 A beschreibt die Herstellung und Verwendung von Polyestern aus mindestens 40 mol% Terephthalsäure in der Säurekomponente und 1 ,4-Butandiol und 1 ,6-Hexandiol im Verhältnis 10:90 bis 90:10 als Schmelzkleber und Beschichtungsmasse.

US 4,299,934 A beschreibt die Herstellung und Verwendung von Polyestern aus Terephthalsäure und 1,6-Hexandiol als Schmelzkleber und Beschichtungsmasse.

EP 0 354 527 A2 beschreibt die Herstellung und Verwendung von feuchtigkeitshärtenden Schmelzklebstoffen mit hoher Abbindegeschwindigkeit aus Umsetzungsprodukten von Polyisocyanaten Hydroxypolystern.

WO 2009/010324 A2 beschreibt Klebstoffe enthaltend Polyester auf Basis von Dicarbonsäuren mit ungerader Kohlenstoffanzahl und Polyolen mit ungerader Kohlenstoffanzahl. Bei den Klebstoffen kann es sich auch um (reaktive) Schmelzklebstoffe handeln.

EP 0 248 658 A2 beschreibt Polyurethan Schmelzkleber, bestehend aus dem Reaktionsprodukt von kristallinem Polyesterdiol und Diisocyanat, wobei die Säurekomponente im Polyester zu mindestens 50 mol-% aus einer symmetrischen aromatischen Carbonsäure besteht.

Bei der Herstellung der vorab genannten Systeme ist darauf zu achten, dass die erhaltenen Polymere möglichst geringe VOC-Werte aufweisen. VOC bzw. VOCs nach volatile organic compound[s] ist die Sammelbezeichnung für organische, also kohlenstoffhaltige Stoffe, die leicht verdampfen und daher flüchtig sind.

Nachteilig ist, dass bei der Schmelzekondensation von Diolen mit Dicarbonsäuren, Diestern und/oder Dianhydriden mehrere Nebenreaktionen auftreten können. Hierzu zählt unter anderem die Bildung von cyclischen Dimeren durch Ringschluss eines Diolmoleküls mit einem Dicarbonsäurederivat. Die cyclischen Dimere bilden sich über eine Gleichgewichtsreaktion aus linearen Dimeren, die wiederum durch Umesterungsreaktionen an den Kettenenden der linearen Polyesterketten entstehen (vgl. EP 1571171). Das bedeutet, dass immer ein Anteil an cyclischen Dimeren neben dem linearen Polyester vorliegt. Abhängig von der Größe und Stabilität des Rings liegt der typische Anteil bei bis zu 1 Gew.-% (vgl. US 5712320).

Die Flüchtigkeit der Cyclen ist abhängig von der Ringgröße und somit abhängig von der Art der eingesetzten Monomerbausteine. Beispielsweise bilden Adipinsäure und Diethylenglykol ein cyclisches Diethylenglykoladipat aus insgesamt 13 Ring-Atomen, das leicht sublimiert (vgl. US 5,712,320). Da die cyclischen Dimere keine Hydroxylfunktionalität besitzen, reagieren sie nicht mit Isocyanatgruppen und werden nicht in das Polyurethannetzwerk eingebaut. Die Cyclen können daher aus dem ausgehärteten Klebstoff abdampfen oder migrieren. Dies ist besonders bei Verklebungen im Innenraum von Fahrzeugen und im Verpackungsbereich für Lebensmittel problematisch. Bei Lebensmittelverpackungen können die flüchtigen Bestandteile in die Lebensmittel migrieren und den Geschmack verändern oder die Lebensmittel gesundheitsbedenklich schädigen. Im Automobilbereich reichern sich die flüchtigen Bestandteile innerhalb der Fahrgastzelle in der Atemluft an und können für einen unangenehmen Geruch sorgen. Diese können gesundheitlich bedenklich sein. Besonders kritisch ist es, wenn die ausgasenden Substanzen sich auf kalten Oberflächen, wie der Windschutzscheibe, abscheiden und dort zu Beeinträchtigungen der Sicht führen. Dieser Effekt wird allgemein als "Fogging" bezeichnet.

Aus den vorab genannten Gründen besteht für Anwendungen im Automobilinnenbereich die Forderung nach Bauteilen sowie Kleb-, Dicht- und Beschichtungsstoffen mit niedrigen VOC- und Fogging-Werten, die in der Regel nach der Industrienorm VDA 278 gemessen werden. Die Norm definiert die Prüfbedingungen zur Ermittlung der Emissionswerte bei bestimmten Temperaturen. Nach den geforderten Grenzwerten für ausgehärtete Kleb- und Dichtstoffe definierter Schichtdicke darf der VOC-Wert, das ist der Anteil an flüchtigen organischen Substanzen, die bei 90 °C innerhalb von 30 Minuten als Gase emittiert werden, 100 µg/g nicht überschreiten. Zusätzlich darf der sogenannte FOG-Wert, der ein Maß für die Menge an organischen Emissionen bei 120 °C innerhalb von 30 Minuten nach vorangegangener Messung des VOC-Wertes ist, nicht höher als 250 µ/g liegen.

Die Literatur, z. B. die Patentanmeldungen DE 19528539 und DE 19601410, JP 2004107457 und EP 1481998, beschreibt vielfältige Versuche, flüchtige Cyclen destillativ bei erhöhten Temperaturen und unter vermindertem Druck zu entfernen. Wird beispielsweise eine Polyesterschmelze im Anschluss an die Kondensation rasch auf Temperaturen unterhalb des Erweichungspunkts abgekühlt, gelingt es, den Anteil an cyclischen Komponenten zu verringern. Sobald der Polyester jedoch erneut aufgeschmolzen wird, steigt die Konzentration an dimeren Cyclen wieder an, da sich die cyclischen Komponenten durch die Gleichgewichtsreaktion nachbilden.

Ausgehärtete Polyurethanschmelzklebstoffe auf der Basis von amorphen festen oder flüssigen Polyesterpolyolmischungen erfüllen in bestimmten Kombinationen die Grenzwerte der Automobilindustrie gemäß VDA 278. Hingegen haben ausgehärtete Formulierungen, die zusätzlich zu amorphen Polyesterpolyolen am Markt übliche feste, kristalline oder teilkristalline Polyesterpolyole enthalten, zu hohe VOC- und FOG- Werte und erfüllen die Grenzwerte gemäß der VDA 278 nicht. Der Grund ist, dass die üblicherweise für die Synthese kristalliner Polyester eingesetzten Monomerbausteine dimere Cyclen bilden, die im für die VDA 278 relevanten Bereich flüchtig sind. Hierzu zählen vor allem die Dimere aus aliphatischen Diolen und Dicarbonsäuren, wie beispielsweise cyclisches Neopentylglykoladipat, Butandioladipat, Hexandioladipat, Hexandiolsebacat etc.

Die US 5712230 beispielsweise beansprucht emissionsarme Polyesterpolyurethanschäume, in denen Polyester eingesetzt werden, deren Monomere keine Cyclen mit Ringgrößen zwischen 12 und 14 Atomen bilden können.

Die WO 2012125353 beansprucht Polyesterpolyole basierend auf Phthalsäureanhydrid und ausgewählten Diolbausteinen, beispielsweise Ethylenglykol, Propylenglykol, Neopentylglykol oder Hexandiol. Die Polyesterpolyole besitzen zwar eine geringe Konzentration an cyclischen Dimeren, allerdings sind die Polymere nicht kristallin.

Aufgabe der vorliegenden Erfindung war daher die Bereitstellung von Kleb- bzw. Dichtstoffformulierungen auf der Basis von reaktiven Schmelzklebstoffen, die die gleichen Anforderungen wie die Formulierungen des Stands der Technik erfüllen und niedrige VOC- und FOG-Werte aufweisen und den Grenzwerten der Automobilindustrie gemäß der Norm VDA 278 entsprechen. Darüber hinaus soll die Schmelzklebstoffformulierung auch dauerhaft, das heißt auch nach Lagerung der eingesetzten Systeme, z. B. in der Schmelze, eine geringe Cyclenkonzentration aufweisen. Nach der Aushärtung, beispielsweise mit Diisocyanaten, können sich in der Regel keine dimeren Cyclen mehr bilden.

Das vorab genannte komplexe Anforderungsprofil wird durch die Verwendung spezifischer Polyester gemäß der vorliegenden Erfindung in reaktiven Schmelzklebstoffen gelöst.

Ein erster Gegenstand der vorliegenden Erfindung ist demgemäß die Verwendung von Polyestern enthaltend mindestens 50 Molprozent, bezogen auf die Polycarbonsäurekomponenten, Terephthalsäure oder ein Derivat davon und enthaltend mindestens 40 Molprozent, bezogen auf die Polyolkomponenten, an Diolen der Formel HO-(CH2)x-OH mit x ≥ 6 in reaktiven Schmelzklebstoffen, bevorzugt in Schmelzklebstoffen auf Basis von Polyurethanen, wobei das zahlenmittlere Molekulargewicht der verwendeten Polyester 500 - 30 000 g/mol beträgt und die Summe der einzelnen Schmelzenthalpien der Polyester in der ersten Aufheizkurve 5 bis 130 J/g beträgt, und die Konzentration an Säureendgruppen, bestimmt nach DIN EN ISO 2114, unter 2 mg KOH/g liegt.

Es hat sich überraschend gezeigt, dass durch die erfindungsgemäßen Monomerkombinationen feste, kristalline oder teilkristalline Polyesterpolyole mit einem Schmelzpunkt oberhalb der Raumtemperatur erhalten werden, die nach Aushärtung im reaktiven Schmelzklebstoff geringe VOC- und FOG- Werte aufweisen.

Die Emissionswerte gemessen gemäß VDA 278 liegen selbst bei Formulierungen, die als Polyole ausschließlich die erfindungsgemäßen kristallinen oder teilkristallinen Polyester enthalten bei geringeren Messwerten als konventionelle Polyesterpolyole, wie beispielsweise Hexandioladipat. Erfindungsgemäß liegen die VOC- und FOG- Werte innerhalb der Grenzwerte der VDA 278.

Die erfindungsgemäß eingesetzten Polyester zeichnen sich durch den zwingend notwendigen Anteil an Terephthalsäure oder einem Derivat davon und Diolen der Formel HO-(CH2)x-OH mit x ≥ 6 aus.

Die erfindungsgemäß eingesetzten Polyester enthalten mindestens 50 Molprozent, bezogen auf die Polycarbonsäurekomponenten, Terephthalsäure oder ein Derivat davon. Geeignete Derivate sind insbesondere Ester der Terephthalsäure. Der Anteil an Terephthalsäure oder deren Derivaten, bezogen auf den Gesamtanteil an Polycarbonsäuren, beträgt mindestens 50 Molprozent, bevorzugt mindestens 60 Molprozent.

Darüber hinaus kann der erfindungsgemäß eingesetzte Polyester weitere Di- oder Polycarbonsäuren enthalten. Die restlichen Di- bzw. Polycarbonsäuren bzw. deren Derivate sind beliebig. Beispiele für geeignete Di- und/oder Polycarbonsäuren und deren Derivate sind zum einen weitere aromatische Verbindungen wie Isophthalsäure, Naphthalindicarbonsäure und Phthalsäureanhydrid. Weitere Beispiele sind cyclische und lineare aliphatische Dicarbonsäuren wie Cyclohexandicarbonsäure, Hexahydrophthalsäure, Bernsteinäure, Glutarsäure, Adipinsäure, Sebazinsäure, Azelainsäure, 1,12-Dodecandicarbonsäure, Brassylsäure sowie deren Diester und Anhydride. Auch Polycarbonsäuren mit mehr als zwei funktionellen Gruppen, wie beispielsweise Trimellitsäureanhydrid können eingesetzt werden.

Im Rahmen der vorliegenden Erfindung werden unter Di- oder Polycarbonsäuren auch deren Derivate, beispielsweise Ester oder Anhydride, verstanden.

Geeignete Diole der Formel HOOC-(CH2)x-COOH mit x ≥ 6 sind insbesondere Hexandiol, Nonandiol, Decandiol und Dodecandiol, wobei Hexandiol besonders bevorzugt eingesetzt wird.

Der Anteil dieser Diole, bezogen auf den Gesamtanteil an Polyolen, beträgt mindestens 40 Molprozent, bevorzugt mindestens 50 Molprozent und ganz besonders bevorzugt 100 Molprozent.

Darüber hinaus kann der erfindungsgemäß eingesetzte Polyester weitere Di- oder Polyole enthalten. Beispiele für geeignete Di- oder Polyole und deren Derivate sind aliphatische Diole, wie beispielsweise Monoethylenglykol, Diethylenglykol, 1,3-Propandiol, 1,2-Propandiol, 1,4-Butandiol, 1,5-Pentandiol, Methylpropandiol, Dicidol, Cyclohexandimethanol, Butylethylpentandiol, Neopentylglykol. Auch Polyole mit mehr als zwei funktionellen Gruppen, wie beispielsweise Trimethylolpropan, Pentaerythrol oder Glycerin können eingesetzt werden. Außerdem können Lactone und Hydroxycarbonsäuren als Di- oder Polyole verwendet werden.

Die beschriebenen Polyester erlauben die Bereitstellung von Schmelzklebstoffen mit geringen VOC- und FOG- Werten, da cyclische Dimere aus diesen Monomeren durch die aromatischen Ringstruktur vergleichsweise steif sind, das Gleichgewicht liegt daher vermutlich stark auf der Seite der linearen anstelle der cyclischen Dimere.

Die Synthese der Polyester erfolgt bevorzugt über eine Schmelzekondensation. Hierzu werden die vorab genannten Di- oder Polycarbonsäuren und Di- oder Polyole im Äquivalentverhältnis von Hydroxyl- zu Carboxylgruppen von 0.5 bis 1.5, bevorzugt 1.0 bis 1.3, vorgelegt und aufgeschmolzen. Die Polykondensation erfolgt in der Schmelze bei Temperaturen zwischen 150 und 280 °C innerhalb von 3 bis 30 Stunden. Dabei wird zunächst ein Großteil der freiwerdenden Wassermenge bei Normaldruck abdestilliert. Im weiteren Verlauf wird das übrige Reaktionswasser sowie leicht flüchtige Diole abgespalten, bis das angestrebte Molekulargewicht erreicht ist. Gegebenenfalls kann dies durch verminderten Druck, eine Vergrößerung der Oberfläche oder durch Durchleiten eines inerten Gasstroms erleichtert werden. Die Reaktion kann zusätzlich durch Zugabe eines Schleppmittels und/oder eines Katalysators vor oder während der Reaktion beschleunigt werden. Geeignete Schleppmittel sind beispielsweise Toluol und Xylole. Typische Katalysatoren sind Organotitan- oder-zinnverbindungen wie Tetrabutyltitanat oder Dibutylzinnoxid. Denkbar sind auch Katalysatoren, die auf anderen Metallen wie z. B. Zink oder Antimon basieren, sowie metallfreie Veresterungskatalysatoren. Weiterhin sind weitere Additive und Fahrhilfsmittel wie Antioxidantien oder Farbstabilisatoren möglich.

Die erfindungsgemäß eingesetzten Polyester besitzen mindestens eine Hydroxyl- und/oder Carboxylendgruppe, bevorzugt liegt die Funktionalität zwischen 2,0 und 3,0.

Die Konzentration an Hydroxylendgruppen, titrimetrisch nach DIN 53240-2 bestimmt, liegt zwischen 0 und 200 mg KOH /g, bevorzugt zwischen 5 und 50 mg KOH /g.

Die Konzentration an Säureendgruppen, bestimmt nach DIN EN ISO 2114, liegt unter 2 mg KOH/g.

Das zahlenmittlere Molekulargewicht der erfindungsgemäß eingesetzten Polyester beträgt 500 - 30 000 g/mol, vorzugsweise 1000 - 20 000 g/mol. Es wird nach DIN 55672-1 mittels Gelpermeationschromatographie in Tetrahydrofuran als Eluent und Polystyrol zur Kalibrierung bestimmt.

Die erfindungsgemäßen Polyester besitzen einen oder mehrere Schmelzpunkte. Bevorzugt liegt mindestens ein Schmelzpunkt oberhalb der Raumtemperatur von 23°C. Die Summe der einzelnen Schmelzenthalpien in der ersten Aufheizkurve beträgt 5 - 130 J/g.

Zusätzlich kann der erfindungsgemäße Polyester eine Glasübergangstemperatur im Bereich von -80 °C bis 100 °C, bevorzugt zwischen -60 °C und 0 °C besitzen.

Die Bestimmung der thermischen Eigenschaften erfolgt nach der DSC-Methode nach DIN 53765. Für die Ermittlung der Schmelzpunkte wird die erste Aufheizkurve herangezogen, für die Ermittlung der Glasübergangstemperatur die zweite Aufheizkurve.

In den erfindungsgemäßen reaktiven Schmelzklebstoffen werden bevorzugt Mischungen unterschiedlicher Polyesterpolyole eingesetzt, da sich durch eine gezielte Mischung ein auf die Anwendung abgestimmtes, ausgewogenes Eigenschaftsprofil einstellen lässt. Insbesondere werden amorphe, nichtkristalline, bei Raumtemperatur feste oder flüssige Polyesterpolyole mit festen, kristallinen Polyesterpolyolen kombiniert. Durch die Verwendung von kristallinen Komponenten lässt sich unter anderem ein schnelles physikalisches Abbinden und somit eine hohe Anfangsfestigkeit erreichen. Hohe Anfangsfestigkeiten erlauben eine zügige Weiterverarbeitung des verklebten Bauteils und somit kurze Taktzeiten. Daher ist ein gewisser Anteil an kristallinen Polyesterpolyolen in der Schmelzklebstoffformulierung erforderlich.

Gemäß der vorliegenden Erfindung handelt es sich bei den Schmelzklebstoffen um reaktive Schmelzklebstoffe (Reactive Hot-melts, RHM), die zusätzlich chemisch vernetzen, wobei feuchtigkeitshärtende Schmelzklebstoffe insbesondere bevorzugt sind.

Bei der Anwendung in reaktiven Schmelzklebstoffen beträgt das zahlenmittlere Molekulargewicht der erfindungsgemäß eingesetzten Polyester bevorzugt 500 - 10 000 g/mol, vorzugsweise 2000-8000 g/mol.

Der Anteil des erfindungsgemäß eingesetzten Polyesters an der Formulierung beträgt, bezogen auf die gesamte Formulierung, 1 - 99 Gewichtsprozent, bevorzugt 5-85 Gewichtsprozent und besonders bevorzugt 10 - 70 Gewichtsprozent.

Dadurch wird eine ausreichende Abbindegeschwindigkeit und daraus resultierend eine ausreichende Handhabungsfestigkeit des reaktiven Hotmelts unmittelbar nach dem Klebstoffauftrag gewährleistet.

In bevorzugten Ausführungsformen sind in den reaktiven Schmelzklebstoffen neben den erfindungsgemäß eingesetzten Polyestern auch andere Polyole vorhanden, unter denen beispielsweise Polyesterpolyole, Polyetherpolyole und beliebige hydroxylfunktionelle Komponenten zu verstehen sind. Die Wahl dieser Polyole ist an sich beliebig. Allerdings sollen die eingesetzten Polyole die VOC- und FOG- Werte der Formulierung nicht wesentlich erhöhen. Bevorzugt sollen die VOC und FOG- Werte der einzelnen Polyole, bezogen auf ihren Anteil in der gesamten Formulierung, die erforderlichen Grenzwerte gemäß der VDA 278 nicht überschreiten.

Die beigemischten Polyesterpolyole können flüssige oder feste, amorphe oder (teil-)kristalline Polyester mit Molekulargewichten mit einem Zahlenmittel zwischen 500 g/mol und 30000 g/mol, bevorzugt zwischen 2000 g/mol und 10000 g/mol (berechnet aus der Hydroxylzahl) sein, wobei lineare Polyesterpolyole bevorzugt verwendet werden. Die beigemischten Polyetherpolyole sind Polyetherdi- und -triole. Beispiele hierfür sind Homo- und Copolymere aus Ethylenglykol, Propylenglykol und Butandiol-1,4. Das Molekulargewicht (Zahlenmittel) der beigemischten Polyetherpolyole sollte in einem Bereich von 200 g/mol bis 10000 g/mol, bevorzugt zwischen 400 g/mol und 6000 g/mol sein. Beispiele für beliebige hydroxyfunktionelle Komponenten sind funktionalisierte (H acide) thermoplastische Polyurethane (TPU) oder Polyacrylate und/oder Ethylen-Vinylacetatcopolymere (EVA).

Die feuchtigkeitsvernetzenden Schmelzklebstoffe werden durch die Umsetzung der Polyolmischung mit Polyisocyanaten erhalten. In den Klebstoffen beträgt in der Regel das OH:NCO-Verhältnis von Polyester zu Isocyanat 1 : 1,2 bis 1 : 3, vorzugsweise von 1 : 1,5 bis 1 : 2,5.

Die Polyisocyanate können di- und/oder multifunktionelle, aromatische, aliphatische und/oder cycloaliphatische Isocyanate sowie carbodiimidmodifizierte Isocaynate oder isocyanatterminierte Präpolymere sein. Aromatische Polyisocyanate sind besonders bevorzugt. Beispiele für Polyisocyanate sind 4,4'-Diphenylmethandiisocyanat, 2,4'-Diphenylmethandiisocyanat, Toluoldiisocyanat-Isomere, Isophorondiisocyanat, Hexamethylendiisocyanat, 4,4'-Dicyclohexylmethandiisocyanat und Mischungen daraus. Insbesondere handelt es sich um 4,4'-Diphenylmethandiisocyanat und Mischungen aus 4,4'-Diphenylmethandiisocyanat und 2,4'-Diphenylmethandiisocyanat.

Außer den erfindungsgemäß eingesetzten Polyestern und Polyisocyanaten kann die Klebstoffformulierung bis zu 50 Gew.-%, bezogen auf die gesamte Formulierung, an weiteren Additiven enthalten, die beispielsweise für eine verbesserte Hydrolysestabilität sorgen. Auch hier ist zu beachten, dass die VOC- und Fogging-Werte der gesamten Formulierung nicht wesentlich erhöht werden.

Diese Zusätze können sein: nichtfunktionalisierte Polymere, z. B. thermoplastische Polyurethane (TPU) und/oder Polyacrylate und/oder Ethylen-Vinylacetatcopolymere (EVA); Pigmente bzw. Füllstoffe, z. B. Talkum, Siliciumdioxid, Titandioxid, Bariumsulfat, Calciumcarbonat, Ruß oder farbige Pigmente; Tackifier, wie. z. B. Kolophoniumharze, Kohlenwasserstoffharze, Phenolharze sowie Alterungsschutz- und Hilfsmittel.

Die feuchtigkeitsvernetzenden Schmelzklebstoffe enthalten in einer besonderen Ausführungsform neben oder anstelle der Polyisocyanate zusätzlich Organosilane. Die Funktionalisierung der erfindungsgemäß eingesetzten Polyester kann durch eine stufenweise Umsetzung mit Polyisocyanaten zu isocyanatterminierten Präpolymeren und anschließender Reaktion mit Organosilanen oder durch eine Umsetzung mit einem Addukt aus Polyisocyanaten und Organosilanen erfolgen.

Im einfachsten Fall erfolgt die Umsetzung der Polyester mit einem Isocyanatoalkylsilan in einem OH/ NCO-Verhältnis von 1 : 1 bis 1 : 1,5.

Beispiele für Organosilane sind Aminopropyltrimethoxysilan, Aminopropyltriethoxysilan, N-Methyl-Aminopropyltrimethoxysilan, N-Cyclohexyl-Aminopropyltrimethoxysilan, N-Phenyl-Aminopropyltrimethoxysilan Mercaptopropyltrimethoxysilan, Mercaptotriethoxysilan.

Die Herstellung des erfindungsgemäßen reaktiven Schmelzklebstoffs erfolgt im einfachsten Fall durch Mischen der Einzelkomponenten in einem Rührbehälter mit oder ohne Lösungsmittel, vorzugsweise in der Schmelze. Die Aufschmelztemperatur richtet sich nach der Viskosität der Bestandteile. Sie liegt üblicherweise in einem Bereich von 100 bis 180 °C.

Die vorab beschriebenen reaktiven, insbesondere feuchtigkeitshärtenden, Schmelzklebstoffe können abhängig von der Viskosität der jeweiligen Formulierung bei Temperaturen zwischen 50 und 200 °C, bevorzugt zwischen 80 und 150 °C, appliziert werden.

Ebenfalls Gegenstand der vorliegenden Erfindung sind reaktive Schmelzklebstoffe enthaltend Polyester enthaltend mindestens 50 Molprozent, bezogen auf die Polycarbonsäurekomponenten, Terephthalsäure oder ein Derivat davon und enthaltend mindestens 40 Molprozent, bezogen auf die Polyolkomponenten, an Diolen der Formel HO-(CH2)x-OH mit x ≥ 6, wobei das zahlenmittlere Molekulargewicht der verwendeten Polyester 500 - 30 000 g/mol beträgt und die Summe der einzelnen Schmelzenthalpien der Polyester in der ersten Aufheizkurve 5 bis 130 J/g beträgt, und die Konzentration an Säureendgruppen, bestimmt nach DIN EN ISO 2114, unter 2 mg KOH/g liegt.

Die erfindungsgemäßen reaktiven Schmelzklebstoffe eignen sich in besonderer Weise zur Herstellung von Verklebungen einer Vielzahl von Substraten, insbesondere zur Verklebung von metallischen Substraten, Textilien und ganz besonders zur Verklebung diverser Kunststoffe. Die Art und der Umfang der Verklebung sind dabei nicht limitiert. Vorzugsweise handelt es sich bei den Verklebungen um Verklebungen in der Holz- und Möbelindustrie (beispielsweise Montageverklebung sowie die Kaschierung und Laminierung von Dekorfolien auf Faserplatten), im Automobilbereich (beispielsweise Kaschierungen von Folien oder Textilien auf Türseitenteilen, Dachhimmel, die Sitzherstellung sowie Retainerverklebungen), in der Bauindustrie, Schuhindustrie und Textilindustrie sowie im Fensterbau (beispielsweise zur Profilummantelung). Weiterhin eignen sich die erfindungsgemäßen Klebstoffe in der Verpackungsindustrie, als Dichtstoffe sowie als Beschichtungsmaterial.

Die erfindungsgemäßen reaktiven Schmelzklebstoffe eignen sich sowohl für den Einsatz in einkomponentigen als auch in zweikomponentigen Systemen.

Bei den einkomponentigen Klebstoffen erfolgt die Herstellung der Mischung zeitlich unabhängig vom Klebstoffauftrag, insbesondere zu einem deutlich früheren Zeitpunkt. Nach dem Auftrag des erfindungsgemäßen Polyurethanklebstoffs erfolgt die Härtung beispielsweise durch Feuchtigkeit oder thermisch induzierte Reaktion der im Klebstoff enthaltenen Reaktionspartner.

Bei den zweikomponentigen Klebstoffen wird die Mischung unmittelbar vor Klebstoffauftrag hergestellt. Der Nachteil eines zweikomponentigen Auftrags gegenüber einem einkomponentigen Auftrag ist der erhöhte technische Aufwand sowie eine größere Fehleranfälligkeit, beispielsweise beim Mischen.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele:

### Beispiel 1: Polyester 1 (erfindungsgemäß)

5,47 kg Dimethylterephthalat (31,9 mol) werden zusammen mit 3,77 kg Hexandiol-1,6 (31,9 mol), 1,58 kg Butandiol-1,4 (17,6 mol) und 1 g (0.01 Gewichtsprozent) eines Titankatalysators in einem Kolben mit Destillationsaufsatz unter Stickstoff aufgeschmolzen. Bei einer Temperatur von 210°C wird innerhalb von etwa zwei bis vier Stunden der größte Teil des entstehenden Methanols abdestilliert. Danach werden 1,34 kg Isophthalsäure (8,1 mol) und 0,59 kg Adipinsäure (4,0 mol) chargiert, die Temperatur auf 230 °C erhöht und innerhalb von etwa vier bis sechs Stunden der größte Teil des entstehenden Reaktionswassers abdestilliert. Anschließend wird der Druck in der Apparatur stufenweise bis auf 10 mbar erniedrigt. Die Reaktion ist beendet, wenn keine Säureendgruppen mehr vorliegen (Säurezahl < 1 mg KOH/g) und eine Konzentration an Hydroxylendgruppen von 30 mg KOH/g erreicht wurde. Der Polyester besitzt einen Schmelzpunkt von 89°C mit einer Schmelzenthalpie von 30 J/g. Der Polyester weist nach Umsetzung mit Diphenylmethandiisocyanat, eingesetzt im Verhältnis NCO:OH von 2.2, und Aushärtung im Klimaschrank einen VOC-Wert von 10 mg/kg und einen Fogging-Wert von 138 mg /kg, gemessen nach der VDA 278, auf.

### Beispiel 2: Polyester 2 (erfindungsgemäß)

961 g Dimethylterephthalat (5,0 mol) werden zusammen mit 524 g Hexandiol-1,6 (4,4mol), 220 g Butandiol-1,4 (2,4 mol) und 0,3 g (0.02 Gewichtsprozent) eines Titankatalysators in einem Kolben mit Destillationsaufsatz unter Stickstoff aufgeschmolzen. Bei einer Temperatur von 210°C wird innerhalb von etwa zwei bis vier Stunden der größte Teil des entstehenden Methanols abdestilliert. Danach werden 206 g Isophthalsäure (1,2 mol) chargiert, die Temperatur auf 230 °C erhöht und innerhalb von etwa vier bis sechs Stunden der größte Teil des entstehenden Reaktionswassers abdestilliert. Anschließend wird der Druck in der Apparatur stufenweise bis auf 10 mbar erniedrigt. Die Reaktion ist beendet, wenn keine Säureendgruppen mehr vorliegen (Säurezahl < 1 mg KOH/g) und eine Konzentration an Hydroxylendgruppen von 30 mg KOH/g erreicht wurde. Der Polyester besitzt einen Schmelzpunkt von 98°C mit einer Schmelzenthalpie von 37 J/g. Der Polyester weist nach Umsetzung mit Diphenylmethandiisocyanat, eingesetzt im Verhältnis NCO:OH von 2.2, und Aushärtung im Klimaschrank einen VOC-Wert von 3 mg/kg und einen Fogging-Wert von 15 mg /kg, gemessen nach der VDA 278, auf.

### Beispiel 3: Polyester V1 (nicht erfindungsgemäß)

2,48 kg Dimethylterephthalat (12,8 mol) werden zusammen mit 5,09 kg Butandiol-1,4 (56,7 mol) und 1 g (0.01 Gewichtsprozent) eines Titankatalysators in einem Kolben mit Destillationsaufsatz unter Stickstoff aufgeschmolzen. Bei einer Temperatur von 210 °C wird innerhalb von etwa zwei bis vier Stunden der größte Teil des entstehenden Methanols abdestilliert. Danach werden 2,86 kg Isophthalsäure (17,2 mol) und 2,19 kg Adipinsäure (15,0 mol) chargiert, die Temperatur auf 230 °C erhöht und innerhalb von etwa vier bis sechs Stunden der größte Teil des entstehenden Reaktionswassers abdestilliert. Anschließend wird der Druck in der Apparatur stufenweise bis auf 10 mbar erniedrigt. Die Reaktion ist beendet, wenn keine Säureendgruppen mehr vorliegen (Säurezahl < 1 mg KOH/g) und eine Konzentration an Hydroxylendgruppen von 30 mg KOH/g erreicht wurde. Der Polyester besitzt einen Schmelzpunkt von 92 °C mit einer Schmelzenthalpie von 6 J/g. Der Polyester weist nach Umsetzung mit Diphenylmethandiisocyanat, eingesetzt im Verhältnis NCO:OH von 2.2, und Aushärtung im Klimaschrank einen VOC-Wert von 186 mg/kg und einen Fogging-Wert von 10 mg /kg gemessen nach der VDA 278 auf.

## Patentansprüche

1. Verwendung von Polyestern enthaltend mindestens 50 Molprozent, bezogen auf die Polycarbonsäurekomponenten, Terephthalsäure oder ein Derivat davon und enthaltend mindestens 40 Molprozent, bezogen auf die Polyolkomponenten, an Diolen der Formel HO-(CH2)x-OH mit x ≥ 6, in reaktiven Schmelzklebstoffen, wobei das zahlenmittlere Molekulargewicht der verwendeten Polyester 500 - 30 000 g/mol beträgt (bestimmt nach der in der Beschreibung angegebenen Methode) und die Summe der einzelnen Schmelzenthalpien der Polyester in der ersten Aufheizkurve 5 bis 130 J/g beträgt (bestimmt nach der in der Beschreibung angegebenen Methode), und die Konzentration an Säureendgruppen, bestimmt nach DIN EN ISO 2114, unter 2 mg KOH/g liegt.

2. Verwendung gemäß Anspruch 1, **dadurch gekennzeichnet, dass** Hexandiol, Nonandiol, Decandiol und Dodecandiol als Diole der Formel HO-(CH2)x-OH eingesetzt werden.

3. Reaktive Schmelzklebstoffe enthaltend Polyester enthaltend mindestens 50 Molprozent, bezogen auf die Polycarbonsäurekomponenten, Terephthalsäure oder ein Derivat davon und enthaltend mindestens 40 Molprozent bezogen auf die Polyolkomponenten an Diolen der Formel HO-(CH2)x-OH mit x ≥ 6, wobei das zahlenmittlere Molekulargewicht der verwendeten Polyester 500 - 30 000 g/mol beträgt (bestimmt nach der in der Beschreibung angegebenen Methode) und die Summe der einzelnen Schmelzenthalpien der Polyester in der ersten Aufheizkurve 5 bis 130 J/g beträgt (bestimmt nach der in der Beschreibung angegebenen Methode), und die Konzentration an Säureendgruppen, bestimmt nach DIN EN ISO 2114, unter 2 mg KOH/g liegt.

4. Verwendung von Schmelzklebstoffen gemäß Anspruch 3 zur Herstellung von Verklebungen.

5. Verwendung gemäß Anspruch 4, **dadurch gekennzeichnet, dass** es sich bei den Verklebungen um Verklebungen in der Holz- und Möbelindustrie, im Automobilbereich, in der Bauindustrie, Schuhindustrie und Textilindustrie sowie im Fensterbau.

6. Verwendung von Schmelzklebstoffen gemäß Anspruch 3 als Dichtstoffe sowie als Beschichtungsmaterial.

7. Verwendung gemäß einem oder mehreren der Ansprüche 4 bis 6, **dadurch gekennzeichnet, dass** die Schmelzklebstoffe in einkomponentigen oder in zweikomponentigen Systemen eingesetzt werden.

## Claims

1. Use of polyesters containing at least 50 mole per cent, based on the polycarboxylic acid components, terephthalic acid or a derivative thereof and containing at least 40 mole per cent, based on the polyol components, of diols of the formula HO-(CH2)x-OH with x ≥ 6, in reactive hotmelt adhesives, where the number-average molecular weight of the polyesters used is 500-30 000 g/mol (determined by the method specified in the description) and the sum total of the individual enthalpies of fusion of the polyesters in the first heating curve is 5 to 130 J/g (determined by the method specified in the description), and the concentration of acid end groups, determined to DIN EN ISO 2114, is below 2 mg KOH/g.

2. Use according to Claim 1, **characterized in that** hexanediol, nonanediol, decanediol and dodecanediol are used as diols of the formula HO-(CH2)x-OH.

3. Reactive hotmelt adhesives containing polyesters containing at least 50 mole per cent, based on the polycarboxylic acid components, terephthalic acid or a derivative thereof and containing at least 40 mole per cent, based on the polyol components, of diols of the formula HO-(CH2)x-OH with x ≥ 6, where the number-average molecular weight of the polyesters used is 500-30 000 g/mol (determined by the method specified in the description) and the sum total of the individual enthalpies of fusion of the polyesters in the first heating curve is 5 to 130 J/g (determined by the method specified in the description), and the concentration of acid end groups, determined to DIN EN ISO 2114, is below 2 mg KOH/g.

4. Use of hotmelt adhesives according to Claim 3 for production of adhesive bonds.

5. Use according to Claim 4, **characterized in that** the adhesive bonds are adhesive bonds in the wood and furniture industry, in the automotive sector, in the construction industry, shoe industry and textile industry, and in window construction.

6. Use of hotmelt adhesives according to Claim 3 as sealants and as coating material.

7. Use according to one or more of Claims 4 to 6, **characterized in that** the hotmelt adhesives are used in one-pack or in two-pack systems.

## Revendications

1. Utilisation de polyesters contenant au moins 50 pour cent en moles, par rapport aux composants de type poly(acide carboxylique), d'acide téréphtalique ou d'un dérivé correspondant et contenant au moins 40 pour cent en moles, par rapport aux composants de type polyol, de diols de formule HO-(CH2)x-OH avec x ≥ 6, dans des adhésifs thermofusibles réactifs, le poids moléculaire moyen en nombre des polyesters utilisés étant de 500 à 30 000 g/mole (déterminé par la méthode indiquée dans la description) et la somme des enthalpies de fusion individuelles des polyesters dans la première courbe de chauffage étant de 5 à 130 J/g (déterminée par la méthode indiquée dans la description), et la concentration de groupes terminaux acides, déterminée selon la norme DIN EN ISO 2114, se situant en dessous de 2 mg de KOH/g.

2. Utilisation selon la revendication 1, **caractérisée en ce que** de l'hexanediol, du nonanediol, du décanediol et du dodécanediol sont utilisés comme diols de formule HO-(CH2)x-OH.

3. Adhésifs thermofusibles réactifs contenant au moins 50 pour cent en moles, par rapport aux composants de type poly(acide carboxylique), d'acide téréphtalique ou d'un dérivé correspondant et contenant au moins 40 pour cent en moles, par rapport aux composants de type polyol, de diols de formule HO-(CH2)x-OH avec x ≥ 6, le poids moléculaire moyen en nombre des polyesters utilisés étant de 500 à 30 000 g/mole (déterminé par la méthode indiquée dans la description) et la somme des enthalpies de fusion individuelles des polyesters dans la première courbe de chauffage étant de 5 à 130 J/g (déterminée par la méthode indiquée dans la description), et la concentration de groupes terminaux acides, déterminée selon la norme DIN EN ISO 2114, se situant en dessous de 2 mg de KOH/g.

4. Utilisation d'adhésifs thermofusibles selon la revendication 3 pour la préparation de collages.

5. Utilisation selon la revendication 4, **caractérisée en ce que** les collages sont des collages dans l'industrie du bois et du meuble, dans le domaine automobile, dans l'industrie de la construction, dans l'industrie des chaussures et dans l'industrie textile ainsi que dans la construction de fenêtres.

6. Utilisation d'adhésifs thermofusibles selon la revendication 3 en tant que matières d'étanchéité ainsi qu'en tant que matériau de revêtement.

7. Utilisation selon une ou plusieurs des revendications 4 à 6, **caractérisée en ce que** les adhésifs thermofusibles sont utilisés dans des systèmes à un composant ou dans des systèmes à deux composants.
